# EUROPEAN PATENT APPLICATION

(11) **EP 4 149 178 A1**
(43) Date of publication of application: **15.03.2023**
(21) Application number: 21804651.4
(22) Date of filing: 08.05.2021
(51) Int. Cl.: H04W 56/00, H04B 7/06

(54) **METHOD AND APPARATUS FOR PROCESSING SYNCHRONIZATION SIGNAL BLOCK, AND COMMUNICATION DEVICE AND READABLE STORAGE MEDIUM**

(30) Priority: 09.05.2020 CN 202010388668
(71) Applicant: Vivo Mobile Communication Co., Ltd., Dongguan, Guangdong 523863 (CN)
(72) Inventor: HONG, Qi, Dongguan, Guangdong 523863 (CN); LI, Gen, Dongguan, Guangdong 523863 (CN)
(74) Representative: Raffay & Fleck
(86) International application number: PCT/CN2021/092376
(87) International publication number: WO 2021/227985

(57) **Abstract**

Disclosed are a method and apparatus for processing a synchronization signal block, and a communication device and a readable storage medium. The method comprises: performing detection on a synchronization signal block (SSB) at a preset frequency domain position, so as to obtain a first SSB, wherein the first SSB comprises at least one of the following: an SSB having a target extended cyclic prefix, and a plurality of identical SSBs; and decoding the first SSB.

## Description

### CROSS-REFERENCE TO RELATED APPLICATIONS

This application claims priority to Chinese Patent Application No. 202010388668.3, filed on May 9, 2020 in China, which is incorporated herein by reference in its entirety.

### TECHNICAL FIELD

This application pertains to the communications field, and specifically relates to a method and an apparatus for processing a synchronous signal block, a communications device, and a readable storage medium.

### BACKGROUND

In FR2x, that is, a frequency band beyond 52.6 GHz, because a propagation loss of a high frequency band is greater than that of a low frequency band, a coverage distance of the high frequency band is worse in Long Time Evolution (Long Time Evolution, LTE). In an implementation process of this application, the inventor finds that there is at least the following problem in the prior art: In the prior art, although a beamforming (beamforming) technology is used to add coverage of a synchronization signal block (Synchronization Signal Block, SSB), in some scenarios, especially in an initial access scenario, because of a high frequency characteristic, a transmission distance of an SSB signal is relatively short, resulting in relatively poor SSB coverage.

### SUMMARY

Embodiments of this application aim to provide a method and an apparatus for processing a synchronous signal block, a communications device, and a readable storage medium, to resolve a problem in the prior art that SSB coverage is relatively poor because of a relatively short transmission distance of an SSB signal in an initial access scenario due to a high frequency characteristic.

To resolve the foregoing technical problem, this application is implemented as follows:

According to a first aspect, an embodiment of this application provides a method for processing a synchronization signal block, including: detecting a synchronization signal block SSB at a preset frequency domain location to obtain a first SSB, where the first SSB includes at least one of the following: an SSB having a target extended cyclic prefix and a plurality of identical SSBs; and decoding the first SSB.

According to a second aspect, an embodiment of this application provides a method for processing a synchronization signal block, including: sending a first synchronization signal block SSB at a preset frequency domain location, where the first SSB includes at least one of the following: an SSB having a target extended cyclic prefix and a plurality of identical SSBs.

According to a third aspect, an embodiment of this application provides an apparatus for processing a synchronization signal block, including: a detection module, configured to detect a synchronization signal block SSB at a preset frequency domain location to obtain a first SSB, where the first SSB includes at least one of the following: an SSB having a target extended cyclic prefix and a plurality of identical SSBs; and a decoding module, configured to decode the first SSB.

According to a fourth aspect, an embodiment of this application provides an apparatus for processing a synchronization signal block, including: a sending module, configured to send a first synchronization signal block SSB at a preset frequency domain location, where the first SSB includes at least one of the following: an SSB having a target extended cyclic prefix and a plurality of identical SSBs.

According to a fifth aspect, an embodiment of this application provides a communications device. The communications device includes a processor, a memory, and a program or an instruction that is stored in the memory and that can be run on the processor, where when the program or the instruction is executed by the processor, the steps of the method in the first aspect are implemented.

According to a sixth aspect, an embodiment of this application provides a communications device. The communications device includes a processor, a memory, and a program or an instruction that is stored in the memory and that can be run on the processor, where when the program or the instruction is executed by the processor, the steps of the method in the second aspect are implemented.

According to a seventh aspect, an embodiment of this application provides a readable storage medium. The readable storage medium stores a program or an instruction, and when the program or the instruction is executed by a processor, the steps of the method in the first aspect are implemented.

According to an eighth aspect, an embodiment of this application provides a readable storage medium. The readable storage medium stores a program or an instruction, and when the program or the instruction is executed by a processor, the steps of the method in the second aspect are implemented.

According to a ninth aspect, an embodiment of this application provides a chip. The chip includes a processor and a communications interface, the communications interface is coupled to the processor, and the processor is configured to run a program or an instruction to implement the method in the first aspect.

According to a tenth aspect, an embodiment of this application provides a chip. The chip includes a processor and a communications interface, the communications interface is coupled to the processor, and the processor is configured to run a program or an instruction to implement the method in the second aspect.

In the embodiments of this application, a first synchronization signal block SSB may be sent at a preset frequency domain location, where the first SSB includes at least one of the following: an SSB having a target extended cyclic prefix and a plurality of identical SSBs; and the first SSB may be further detected at the preset frequency domain location, and the detected first SSB is decoded. An extended cyclic prefix may suppress inter-symbol interference and inter-carrier interference caused by a multipath delay, so as to provide better coverage. Therefore, the first SSB having the target cyclic prefix is sent at the preset frequency domain location, so that coverage of an SSB can be further increased based on beamforming, and correspondingly, the first SSB can be detected at a farther distance. In this way, coverage enhancement of the SSB is implemented. In addition, the plurality of identical SSBs are sent at the preset frequency domain location, so that one or more signals are added on the original basis, which is equivalent to superposition of a plurality of powers. That is, a transmission distance of the SSBs is farther. Correspondingly, the plurality of identical SSBs may be detected at a farther distance. In this way, coverage enhancement of an SSB is also implemented.

### BRIEF DESCRIPTION OF DRAWINGS

FIG. 1 is a schematic structural diagram of an SSB according to an embodiment of this application;
FIG. 2 is a schematic diagram of sending an SSB in a beamforming manner according to an embodiment of this application;
FIG. 3 is a structural diagram of a network system to which the embodiments of this application can be applied;
FIG. 4 is a first flowchart of a method for processing a synchronization signal block according to an embodiment of this application;
FIG. 5 is a second flowchart of a method for processing a synchronization signal block according to an embodiment of this application;
FIG. 6 is a schematic diagram of grouping a plurality of synchronization rasters according to an embodiment of this application;
FIG. 7 is a schematic diagram of repeatedly sending an SSB in frequency domain at a same time domain location according to an embodiment of this application;
FIG. 8 is a schematic diagram of sending or receiving a plurality of consecutive SSBs in a time domain according to an embodiment of this application;
FIG. 9 is a schematic diagram of sending or receiving a plurality of SSBs by using a specific time interval or an SSB index interval according to an embodiment of this application;
FIG. 10 is a schematic diagram of performing repeated sending or receiving in time domain through merging of a plurality of consecutive SSBs according to an embodiment of this application;
FIG. 11 is a first schematic structural diagram of an apparatus for processing a synchronization signal block according to an embodiment of this application;
FIG. 12 is a second schematic structural diagram of an apparatus for processing a synchronization signal block according to an embodiment of this application; and
FIG. 13 is a structural diagram of a communications device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In the specification and the claims of this application, the terms "first", "second", and the like are intended to distinguish between similar objects but do not describe a specific order or sequence. It should be understood that the data used in such a way is interchangeable in proper circumstances so that the embodiments of this application can be implemented in an order other than the order illustrated or described herein. In addition, in the specification and the claims, "and/or" represents at least one of connected objects, and a character "/" generally represents an "or" relationship between associated objects.

The following describes the related terms of this application:
(1) Initial search

When user equipment (User Equipment, UE) is powered on or performs cell handover, an initial search needs to be performed to obtain downlink synchronization of a cell: (1) detection of time synchronization; and (2) detection of frequency synchronization.

It should be noted that a main function of the initial search is to find an available network, that is, the UE performs a blind search on a network-wide frequency band according to a working frequency band supported by the UE and a synchronization signal block number and a global synchronization channel number (Global Synchronization Channel Number, GSCN) specified in a protocol. According to the protocol, in an FR2 band (24.25 GHz-100 GHz), the UE performs blind detection at a step size of 17.28 MHz (sync raster) to find a suitable band for access.

### (2) SSB structure

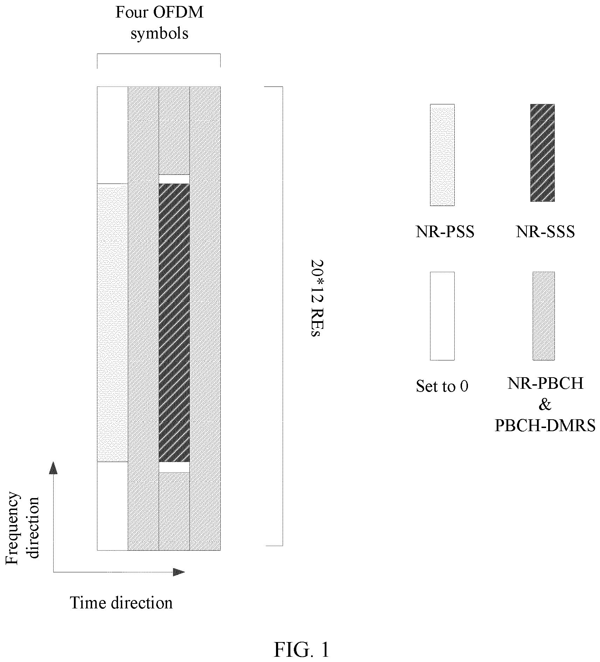

An initial search process is completed by using a synchronization signal block (Synchronization Signal Block, SSB). The SSB includes a primary synchronization signal (Primary Synchronization Signal, PSS), a secondary synchronization signal (Secondary Synchronization Signal, SSS), a physical broadcast channel (Physical Broadcast Channel, PBCH), and a demodulation reference signal (Demodulation Reference Signal, DMRS) in four consecutive orthogonal frequency division multiplexing (Orthogonal Frequency Division Multiplexing, OFDM) symbols, and is mainly used for downlink synchronization. A structure of the SSB is shown in FIG. 1.

### (3) SSB sending mechanism

Due to a lack of low frequency resources, 5G NR uses a high frequency band such as a millimeter wave. Because a propagation loss of the high frequency band is greater than that of a low frequency band a coverage distance of the high frequency band is worse in LTE. Therefore, signal enhancement is implemented through multi-antenna beam forming in 5G, to implement coverage enhancement, that is, an SSB is sent through beamforming.

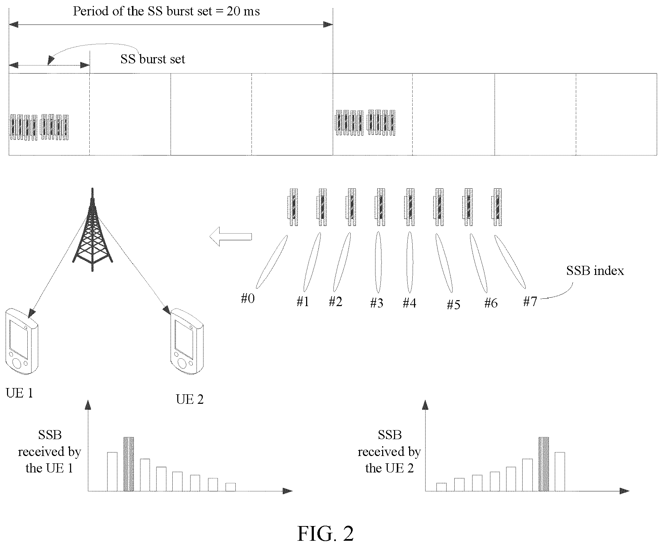

Because a beam is relatively narrow, identical SSBs are sent to different directions in NR through time division duplexing (Time Division Duplexing, TDD), so that UE in each direction can receive the SSB. As shown in FIG. 2, in a range of 5 ms, a base station sends a plurality of SSBs (corresponding to different SSB indexes) to cover different directions. The UE receives a plurality of SSBs with different signal strength, and selects one SSB with greatest signal strength as an SSB beam of the UE.

In the foregoing example, the base station sends a plurality of SSBs to all directions within a time period of 5 ms. Those SSBs form a synchronization signal burst set (SS burst set). A repetition period of the SS burst set is an SS burst set period, and is 20 ms by default in 5G. From the current standard protocol, it can be learned that a period range of an SSB is {5 ms, 10 ms, 20 ms, 40 ms, 80 ms, 160 ms}. By default, the terminal detects an SSB once in 20 ms.

A maximum quantity of SSBs supported in one SS burst set varies according to a frequency. When F ≤ 6 GHz, a maximum quantity of SSBs is 8, and when F > 6 GHz, a maximum quantity of SSBs is 64. The maximum quantities of SSBs are different because a higher frequency results in a heavier loss. To implement better coverage performance, a beam for sending an SSB is also narrow. Therefore, to implement coverage in different directions, more SSBs are required, and therefore a quantity of SSBs is larger.

SSB time domain location:
For a half frame (5 ms) that has an SSB, a quantity of candidate SSBs and an index location of a first symbol are determined according to a subcarrier spacing of an SSB. The following cases are described for the half frame:
Case A-15 KHz interval: An index of a first symbol of a candidate SSB is {2, 8} + 14*n. For F (Frequent) ≤ 3 GHz, n=0 or 1 (Note: If 2 slots are occupied and there are two numbers in {}, there are 4 SSBs in total in 2 ms, and therefore Lmax = 4). For 3 GHz < F ≤ 6 GHz, n = 0, 1, 2, or 3 (4 slots are occupied and Lmax = 8 in 4 ms).
Case B-30 KHz interval: An index of a first symbol of a candidate SSB is {4, 8, 16, 20} + 28*n (2 slots in 1 ms and 2 SSBs in 1 slot). For F<= 3 GHz, n = 0 (2 slots are occupied and Lmax = 4 in 1 ms). For 3 GHz < F ≤ 6 GHz, n = 0, 1, 2, or 3 (4 slots are occupied and Lmax = 8 in 2 ms).
Case C-30 KHz interval: An index of a first symbol of a candidate SSB is {2, 8} + 14*n (2 slots in 1 ms and 2 SSBs in 1 slot). For F (Frequent) ≤ 3 GHz, n = 0 or 1 (2 slots are occupied and Lmax = 4 in 2 ms). For 3 GHz < F ≤ 6 GHz, n = 0, 1, 2, or 3 (4 slots are occupied and Lmax = 8 in 4 ms).
Case D-120 KHz interval: An index of a first symbol of a candidate SSB is {4, 8, 16, 20} + 28*n. For F>6 GHz, n = 0, 1, 2, 3, 5, 6, 7, 8, 10, 11, 12, 13, 15, 16, 17, or 18 (8 slots in 1 ms, 2 SSBs in 1 slot, 16 SSBs are occupied in 1ms in a total of 4 groups, and therefore Lmax = 64 in 4 ms).
Case E-240 KHz Interval: An index of a first symbol of a candidate SSB is {8, 12, 16, 20, 32, 36, 40, 44} + 56*n. For F > 6 GHz, n = 0, 1, 2, 3, 5, 6, 7, or 8 (16 slots in 1 ms, 2 SSBs in 1 slot, 32 SSBs in 1 ms in a total of 2 groups, and therefore Lmax = 64 in 2 ms).

### (4) Cyclic prefix

In an orthogonal frequency division multiplexing (Orthogonal Frequency Division Multiplexing, OFDM) system, a blank symbol may be inserted as a guard interval. In this way, inter-symbol interference (Inter Symbol Interference, ISI) can be eliminated, but inter-carrier Interference (Inter Carrier Interference, ICI) cannot be eliminated. A cyclic prefix is to extract a part in the last specific length of an OFDM signal and place the part in a header of the OFDM signal, and the OFDM signal to which the cyclic prefix is added is used as a new OFDM signal. In this way, ISI and ICI can be completely eliminated. Cyclic prefixes are divided into a normal cyclic prefix and an extended cyclic prefix, which are different in length. If a frequency is higher, cell and delay expansion is usually smaller, and a corresponding CP length is usually shorter.

For the normal cyclic prefix (normal cyclic prefix, NCP), a CP is added to each symbol (14 symbols) in 1 slot, and a CP length is shorter. For the extended cyclic prefix (Extended Cyclic Prefix, ECP), only 12 symbols can be transmitted in 1 slot, and a CP of each symbol is longer. The ECP can better suppress inter-symbol interference and inter-carrier interference caused by a multipath delay, thus providing better coverage, but a system capacity will be correspondingly reduced.

With reference to the accompanying drawings, the following uses specific embodiments and application scenarios to describe a method for processing an SSB and an apparatus for processing an SSB provided in the embodiments of this application, which may be applied to a wireless communications system. The wireless communications system may be a new radio (New Radio, NR) system or another system such as an evolved Long Term Evolution (Evolved Long Term Evolution, eLTE) system, a Long Term Evolution (Long Term Evolution, LTE) system, or a subsequent evolved communications system. Further, the method and the apparatus may be applied to an unlicensed band (Unlicensed Band) in the foregoing wireless communications system.

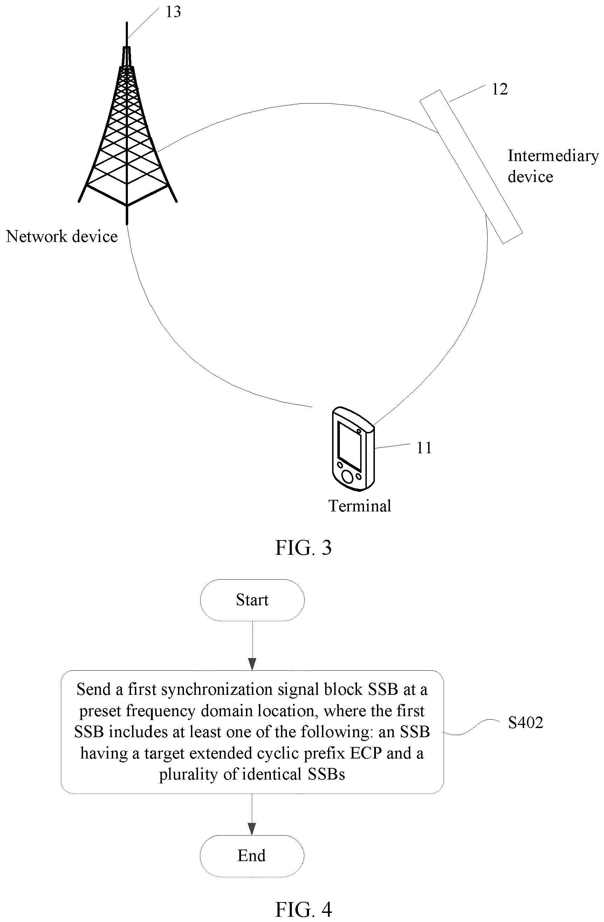

Referring to FIG. 3, FIG. 3 is a structural diagram of a network system to which the embodiments of this application can be applied. As shown in FIG. 3, the network system includes a terminal 11, an intermediate device 12, and a network device 13. The terminal 11 may be user equipment (User Equipment, UE) or another terminal side device, for example, a mobile phone, a tablet personal computer (Tablet Personal Computer), a laptop computer (Laptop Computer), a personal digital assistant (personal digital assistant, PDA), a mobile internet device (Mobile Internet Device, MID), a wearable device (Wearable Device), or a robot. It should be noted that a specific type of the terminal 11 is not limited in the embodiments of this application. The intermediate device 12 may be a device of a new artificial metamaterial such as a large intelligent surface (Large Intelligent Surfaces, LIS), a backscatter (backscatter), a Wi-Fi device, or a relay device (for example, a layer 1 relay, an amplified forwarding relay, or a transparent forwarding relay). The network device 13 may be a network device, a Wi-Fi device, or a terminal device. The network device may be a 4G base station, a 5G base station, or a base station of a later release, or a base station in another communications system, or may be referred to as a NodeB, an evolved NodeB, or a transmission reception point (Transmission Reception Point, TRP), or an access point (Access Point, AP), or another term in the field. Provided that a same technical effect is achieved, the network device is not limited to a specific technical term. In addition, the network device 13 may be a master node (Master Node, MN) or a secondary node (Secondary Node, SN).

In the embodiments of this application, the terminal 11 may communicate with the network device 13 by using the intermediate device 12. For example, the intermediate device 12 may forward a signal sent by the terminal 11 to the network device 13, or may forward a signal sent by the network device 13 to the terminal 11. Forwarding by the intermediate device 12 may be direct forwarding, transparent forwarding, amplified forwarding, sending of a signal after frequency conversion or modulation, or the like. This is not limited herein. Certainly, in the embodiments of this application, a signal transmitted between the terminal 11 and the intermediate device 12 may be a signal that needs to be transmitted between the terminal 11 and the intermediate device 12, that is, the scenario may not include the network device 13. In addition, the terminal 11 may directly communicate with the network device 13.

In addition, in the embodiments of this application, an LIS device is a device of a new artificial material. An LIS node may dynamically/semi-statically adjust an electromagnetic characteristic of the LIS node, and affect a reflection/refraction behavior of an electromagnetic wave radiated to the LIS node, for example, change a frequency, an amplitude, a phase, a polarization direction, and beam spatial energy distribution of a reflection/refraction signal. The LIS node may operate a reflection/refraction signal of an electromagnetic signal to implement functions such as beam scanning/beamforming.

It should be noted that the method for processing an SSB in the embodiments of this application relates to interaction between a network side and a terminal side. Optionally, a device on the network side may be a base station or another network device, and a device on the terminal side may be UE or another terminal side device.

Based on this, in the embodiments of this application, for example, a network side device is a base station and a terminal side device is UE. For an entire interaction process, the method for processing an SSB in the embodiments of this application may include the following steps.

Step S102: A base station sends a first synchronization signal block SSB at a preset frequency domain location, where the first SSB includes at least one of the following: an SSB having a target extended cyclic prefix ECP and a plurality of identical SSBs.

Step S104: UE detects a synchronization signal block SSB at the preset frequency domain location to obtain the first SSB.

Step S106: The UE decodes the first SSB.

To further describe the method for processing an SSB in the embodiments of this application in detail, the following separately describes the steps of the method in the embodiments of this application from a terminal side and a network side.

For a base station side, referring to FIG. 4, FIG. 4 is a first flowchart of a method for processing an SSB according to an embodiment of this application. As shown in FIG. 4, the method includes the following steps.

Step S402: Send a first synchronization signal block SSB at a preset frequency domain location, where the first SSB includes at least one of the following: an SSB having a target extended cyclic prefix ECP and a plurality of identical SSBs.

Optionally, the target extended cyclic prefix in this embodiment of this application may include at least one of the following: an extended cyclic prefix ECP, an ECP-1, and an ECP-2. It should be noted that the foregoing target extended cyclic prefix is only a preferred implementation of this application, and another type of target extended cyclic prefix such as an ECP-3 is also within the protection scope of this application. This may be correspondingly adjusted according to an actual situation.

Different types of extended cyclic prefixes can suppress inter-symbol interference and inter-carrier interference caused by a multipath delay, thus providing better coverage. Therefore, the first SSB having the target cyclic prefix is sent at the preset frequency domain location, so that coverage of an SSB can be further increased based on beamforming, thereby implementing coverage enhancement of the SSB.

In addition, the first SSB sent at the preset frequency domain location is a plurality of identical SSBs, and the plurality of identical SSBs are sent at the preset frequency domain location. Therefore, for a base station, one or more signals are added on the original basis. For example, two identical SSBs are sent together, which is equivalent to superposition of two powers, so that a coverage distance of the SSBs is longer than that of one SSB for transmission. In this way, coverage enhancement of an SSB is also implemented.

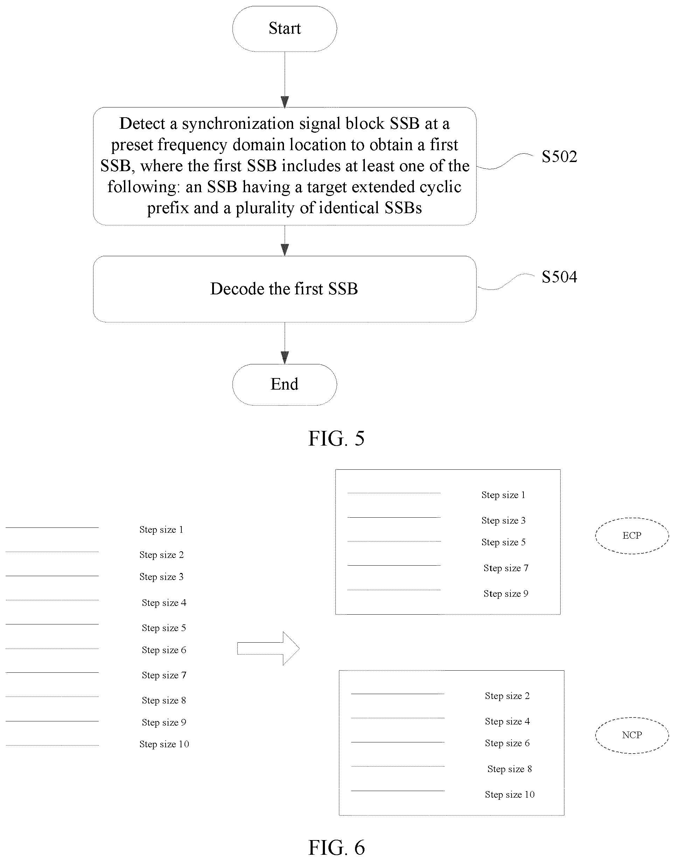

For a terminal side, referring to FIG. 5, FIG. 5 is a second flowchart of a method for processing an SSB according to an embodiment of this application. As shown in FIG. 5, the method includes the following steps.

Step S502: Detect a synchronization signal block SSB at a preset frequency domain location to obtain a first SSB, where the first SSB includes at least one of the following: an SSB having a target extended cyclic prefix and a plurality of identical SSBs.

Step S504: Decode the first SSB.

Optionally, the target extended cyclic prefix in this embodiment of this application may include at least one of the following: an extended cyclic prefix ECP, an ECP-1, and an ECP-2. It should be noted that the foregoing target extended cyclic prefix is only a preferred implementation of this application, and another type of target extended cyclic prefix such as an ECP-3 is also within the protection scope of this application. This may be correspondingly adjusted according to an actual situation.

Different types of extended cyclic prefixes can suppress inter-symbol interference and inter-carrier interference caused by a multipath delay, thus providing better coverage. Therefore, the first SSB having the target cyclic prefix is received at the preset frequency domain location over a longer coverage distance, thereby implementing coverage enhancement of an SSB.

In addition, the first SSB sent by a base station at the preset frequency domain location is a plurality of identical SSBs, and the plurality of identical SSBs are sent at the preset frequency domain location. Therefore, for the base station, one or more signals are added on the original basis. For example, two identical SSBs are sent together, which is equivalent to superposition of two powers, so that a coverage distance of the SSBs is longer than that of one SSB for transmission. Correspondingly, for the terminal side, the plurality of identical SSBs may be received over a longer distance. In this way, coverage enhancement of an SSB is also implemented.

Optionally, cyclic prefixes of the plurality of identical SSBs in this embodiment of this application include one of the following: an extended cyclic prefix ECP and a normal cyclic prefix NCP. The extended cyclic prefix may further include other types of extended cyclic prefixes such as an ECP-1 and an ECP-2.

It should be noted that in a case that the first SSB is a plurality of SSBs having the target extended cyclic prefix or a plurality of identical SSBs, a manner of decoding the first SSB in this embodiment of this application may be: performing joint decoding on the plurality of SSBs having the target cyclic prefix or the plurality of identical SSBs.

That is, in a case that it is detected that the first SSB is a plurality of SSBs, joint decoding needs to be performed on the plurality of SSBs, to implement coverage enhancement of an SSB.

Optionally, the preset frequency domain location in this embodiment of this application is one or more frequency domain locations in a synchronization raster, one or more frequency domain locations in a non-synchronization raster, or one or more frequency domain locations in a combination of a synchronization raster and a non-synchronization raster.

Therefore, in a specific application scenario, when the terminal runs on a specific frequency band (for example, 52.6 GHz), a part in a frequency domain location defined on the frequency band is used for transmission of an SSB with an extended cyclic prefix structure (a first sync raster (synchronization raster) set or a third non-sync raster set), and a part is used for transmission of an SSB with a normal cyclic prefix structure (a second sync raster set or a fourth non-sync raster set). The user terminal searches for the SSB with the target extended cyclic prefix structure in the first sync raster set or the third non-sync raster set. Certainly, the first sync raster set and the third non-sync raster set may be completely orthogonal or have a duplicate sync raster. A user may search for the SSB with the target extended cyclic prefix on the duplicate sync raster.

It should be noted that system information or an RRC message may explicitly indicate that the SSB sent on the carrier is a normal cyclic prefix structure or a target extended cyclic prefix structure. In addition, if a plurality of SSBs having the target cyclic prefix are detected in the foregoing first sync raster set or the third non-sync raster set, the detected plurality of SSBs may be jointly decoded.

For measurement of a Scell configured by using an RRC message or an SSB configured by using system information/an RRC message, the user terminal may determine, in at least one of the following manners, that the configured SSB is an extended cyclic prefix structure or a normal cyclic prefix structure:
(1) There is a correspondence between a configured SSB frequency, that is, an SSB frequency and an SSB with an extended cyclic prefix structure/a normal cyclic prefix structure. For example, for a sync raster frequency point, the foregoing defined correspondence is reused. For a non-sync raster frequency point, some rules are defined to determine a target extended cyclic prefix or a normal cyclic prefix.
   For example, a frequency between two adjacent sync rasters with the target extended cyclic prefix is a target extended cyclic prefix, a frequency between two adjacent sync rasters with the normal cyclic prefix is a normal cyclic prefix, and a frequency between a sync rasters with the normal cyclic prefix and a sync raster with the target extended cyclic prefix that are adjacent is predefined as a target extended cyclic prefix or a normal cyclic prefix.
(2) Explicitly indicate whether the target extended cyclic prefix structure or the normal cyclic prefix structure is used to configure an SSB frequency.
(3) Consistent with configuration of the target extended cyclic prefix or the normal cyclic prefix of a carrier or a BWP or a specific channel configured on a cell.

As shown in FIG. 6, it is assumed that there are 10 sync rasters, which may be further classified into two groups of sync rasters, where one group is used to transmit a target extended cyclic prefix sequence, and the other group is used to transmit a normal cyclic prefix sequence. There may be a duplicate part between the target extended cyclic prefix sequence and the normal cyclic prefix sequence.

Optionally, the preset frequency domain location in this embodiment is a plurality of frequency domain locations corresponding to a same time domain in a plurality of synchronization rasters and/or non-synchronization rasters; or the preset frequency domain location is a plurality of frequency domain locations in a target time domain in a plurality of periods, and the plurality of periods are a plurality of periods in a plurality of synchronization rasters and/or non-synchronization rasters.

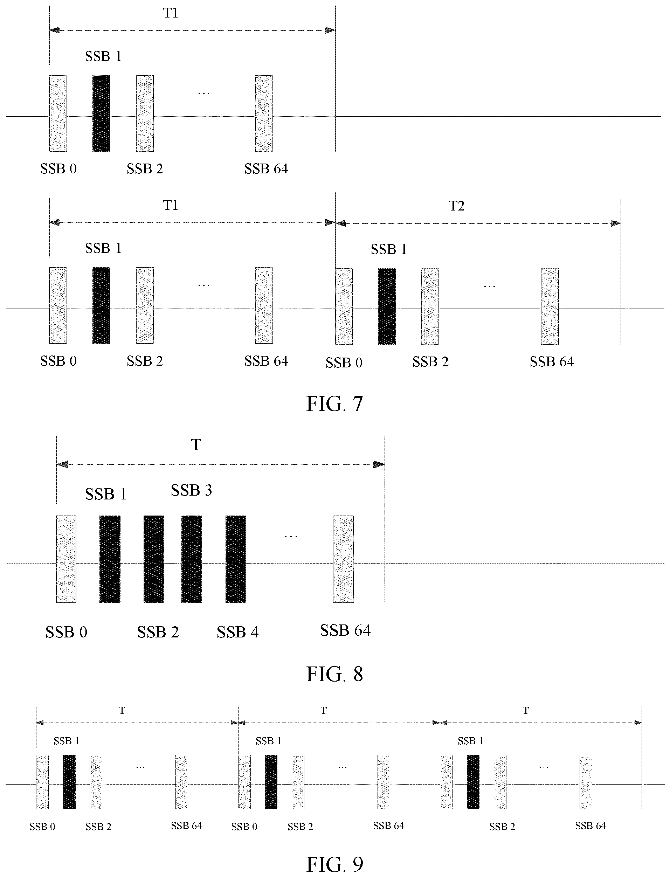

Therefore, in a specific application scenario of this embodiment of this application, as shown in FIG. 7, sync rasters in a sync raster set 1, 3, 5, 7, 9 are used to repeatedly send an SSB in a frequency domain, to enhance coverage of the SSB. That is, the UE may jointly decode an SSB 1 in the sync raster 1 with an SSB 1 in T1 and/or an SSB 1 in T2 in a sync raster 3. That is, the target time domain is the SSB 1 in T1 and the SSB 1 in T2. Certainly, FIG. 7 is merely an example for description. The target time domain may be another SSB, such as an SSB 3 or an SSB 0. This may be correspondingly adjusted according to an actual situation, and is not limited in this application.

For measurement of a Scell configured by using an RRC message or an SSB configured by using system information/an RRC message, the user terminal may determine, in at least one of the following manners, information that is about a configured SSB and on which frequency domain repeated sending is to be performed:
(1) A configured SSB frequency group, that is, SSBs in the configured SSB frequency group are is repeatedly sent.
(2) An SSB frequency and frequency domain repetition times are configured. The UE deduces another SSB frequency according to a predefined rule.

Optionally, the preset frequency domain location in this embodiment of this application is a frequency domain location corresponding to a first time domain location set; and SSBs corresponding to the first time domain location set include at least one of the following: SSBs whose indexes are consecutive, and SSBs whose time intervals or SSB indexes meet a preset relationship.

It should be noted that the SSBs whose time intervals or SSB indexes meet the preset relationship include consecutive SSBs or nonconsecutive SSBs whose time intervals or SSB indexes meet the preset relationship.

In a specific application scenario of this embodiment of this application, for the SSBs whose indexes are consecutive, a plurality of consecutive SSBs are sent and received in a time domain and are jointly decoded, to implement coverage enhancement of an SSB. As shown in FIG. 8, it is predefined that or the base station configures that quasi-colocation (Quasi-Colocation, QCL) information of each R consecutive SSBs is the same. When R=4, the UE may perform joint decoding by using SSBs 1, 2, 3, 4.

In a specific application scenario of this embodiment of this application, for the nonconsecutive SSBs whose time intervals or SSB indexes meet the preset relationship, a plurality of SSBs are sent and received by using a specified time interval or SSB index interval and are jointly decoded, to implement coverage enhancement of an SSB. There are the following two manners for the nonconsecutive SSBs whose time intervals or SSB indexes meet the preset relationship:
(1) As shown in FIG. 9, an SSB index is not extended, and it is specified or configured that SSBs whose SSB index interval is R are repeatedly sent.
(2) An SSB pattern is repeatedly extended.

For a higher subcarrier spacing (Subcarrier Spacing, SSB SCS), if FR2 is still used, one SSB pattern (64 SSBs) occupies only a small part of the entire period of 5 ms. Therefore, identical SSB patterns may be repeatedly sent one or more times in the period of 5 ms, so that coverage is repeatedly enhanced in a time domain. In this case, additional timing information is required. For example:

Case A: {4, 8, 16, 20} + 28*n. for F>6 GHz, n = 0, 1, 2, 3, 5, 6, 7, 8, 10, 11, 12, 13, 15, 16, 17, or 18. This sequence is marked as a sequence 1. After it is predefined that or the base station configures that the sequence 1 is sent, a sequence 2 continues to be sent at a specified time interval. The time interval may be predefined in a protocol or predefined as a different value according to a frequency domain location of a sync raster. The sequence 2 and the sequence 1 are completely identical, except that time domain locations are different. For example, n = 19, 20, 21, 22, 24, 25, 26, 27, 29, 30, 31, 32, 34, 35, 36, or 37. It should be noted that a start value of n may be another value. Then a plurality of SSBs are jointly decoded to enhance coverage of an SSB.

Case B: {8, 12, 16, 20, 32, 36, 40, 44} + 56*n. For F>6 GHz, n = 0, 1, 2, 3, 5, 6, 7, or 8. This sequence is marked as a sequence 1. After it is predefined that or the base station configures that the sequence 1 is sent, a sequence 2 continues to be sent at a specified time interval. The time interval may be predefined in a protocol or predefined as a different value according to a frequency domain location of a sync raster. The sequence 2 and the sequence 1 are completely identical, except that time domain locations are different. For example, n = 9, 10, 11, 12, 14, 15, 16, or 17. It should be noted that a start value of n may be another value.

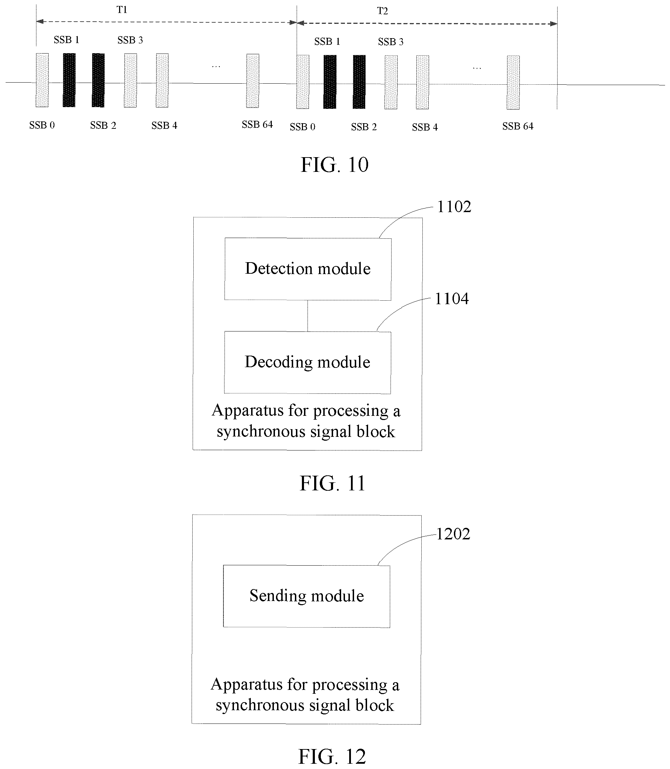

In a specific application scenario of this embodiment of this application, for the consecutive SSBs whose time intervals or SSB indexes meet the preset relationship, a plurality of consecutive SSBs may be merge and are repeatedly sent and received in a time domain and are jointly decoded, to implement coverage enhancement of an SSB. As shown in FIG. 10, joint decoding is performed by using an SSB 1 and an SSB 2 in T1 and an SSB 1 and an SSB 2 in T2.

Optionally, the preset relationship in this embodiment of this application may be a predefined preset relationship, or a preset relationship determined according to a frequency domain location of a synchronization raster.

Optionally, the preset relationship in this embodiment of this application is configured by using at least one of the following:
(1) a time domain or frequency domain location relationship between a primary synchronization signal PSS and a secondary synchronization signal SSS;
(2) a phase difference or a cyclic shift between the PSS and the SSS;
(3) a sequence of the PSS and/or a sequence of the SSS;
(4) a phase or a cyclic shift of a physical broadcast channel-demodulation reference signal PBCH-DMRS;
(5) a master system information block MIB or a system information block SIB; and
(6) a radio resource control RRC message.

It should be noted that, in addition to separately sending or receiving the SSB having the target cyclic prefix, and sending and receiving identical SSBs in a time domain and/or a frequency domain, the SSB having the target cyclic prefix may be repeatedly sent and received in a frequency domain, or the SSB having the target cyclic prefix is repeatedly sent and received in a time domain.

It can be learned that in this embodiment of this application, the network side device may send the SSB having the target extended prefix or the plurality of identical SSBs at the preset frequency domain location. Different types of extended cyclic prefixes can suppress inter-symbol interference and inter-carrier interference caused by a multipath delay, thus providing better coverage. Therefore, the first SSB having the target cyclic prefix is received at the preset frequency domain location over a longer coverage distance. Correspondingly, for the terminal side, the SSB may be received over a longer distance. In this way, coverage enhancement of an SSB is implemented.

In addition, the plurality of identical SSBs are sent at the preset frequency domain location. Therefore, for the base station, one or more signals are added on the original basis. For example, two identical SSBs are sent together, which is equivalent to superposition of two powers, so that a coverage distance of the SSBs is longer than that of one SSB for transmission. Correspondingly, for the terminal side, the plurality of identical SSBs may be received over a longer distance. In this way, coverage enhancement of an SSB is also implemented.

It should be noted that, the method for processing a synchronization signal block provided in the embodiments of this application may be performed by an apparatus for processing a synchronization signal block, or a control module that is in the apparatus for processing a synchronization signal block and that is configured to perform the synchronization signal loading processing method.

Referring to FIG. 11, FIG. 11 is a schematic structural diagram of an apparatus for processing a synchronization signal block according to an embodiment of this application. The apparatus is applied to a terminal side. As shown in FIG. 11, the apparatus includes:
a detection module 1102, configured to detect a synchronization signal block SSB at a preset frequency domain location to obtain a first SSB, where the first SSB includes at least one of the following: an SSB having a target extended cyclic prefix and a plurality of identical SSBs; and
a decoding module 1104, configured to decode the first SSB.

Optionally, the target extended cyclic prefix in this embodiment of this application includes at least one of the following: an extended cyclic prefix ECP, an ECP-1, and an ECP-2.

Optionally, cyclic prefixes of the plurality of identical SSBs in this embodiment of this application include one of the following: a target extended cyclic prefix and a normal cyclic prefix.

Optionally, the preset frequency domain location in this embodiment of this application is one or more frequency domain locations in a synchronization raster, one or more frequency domain locations in a non-synchronization raster, or one or more frequency domain locations in a combination of a synchronization raster and a non-synchronization raster.

Optionally, the preset frequency domain location in this embodiment of this application is a plurality of frequency domain locations corresponding to a same time domain in a plurality of synchronization rasters and/or non-synchronization rasters; or the preset frequency domain location is a plurality of frequency domain locations in a target time domain in a plurality of periods, and the plurality of periods are a plurality of periods in a plurality of synchronization rasters and/or non-synchronization rasters.

Optionally, the preset frequency domain location in this embodiment of this application is a frequency domain location corresponding to a first time domain location set; and SSBs corresponding to the first time domain location set include at least one of the following: SSBs whose indexes are consecutive, and SSBs whose time intervals or SSB indexes meet a preset relationship.

The SSBs whose time intervals or SSB indexes meet the preset relationship include consecutive SSBs or nonconsecutive SSBs whose time intervals or SSB indexes meet the preset relationship.

Referring to FIG. 12, FIG. 12 is a schematic structural diagram of an apparatus for processing a synchronization signal block according to an embodiment of this application. The apparatus is applied to a base station side. As shown in FIG. 12, the apparatus includes:
a sending module 1202, configured to send a first synchronization signal block SSB at a preset frequency domain location, where the first SSB includes at least one of the following: an SSB having a target extended cyclic prefix and a plurality of identical SSBs.

Optionally, the target extended cyclic prefix in this embodiment of this application includes at least one of the following: an extended cyclic prefix ECP, an ECP-1, and an ECP-2.

Optionally, cyclic prefixes of the plurality of identical SSBs in this embodiment of this application include one of the following: a target extended cyclic prefix and a normal cyclic prefix.

Optionally, the preset frequency domain location in this embodiment of this application is one or more frequency domain locations in a synchronization raster, one or more frequency domain locations in a non-synchronization raster, or one or more frequency domain locations in a combination of a synchronization raster and a non-synchronization raster.

Optionally, the preset frequency domain location in this embodiment of this application is a plurality of frequency domain locations corresponding to a same time domain in a plurality of synchronization rasters and/or non-synchronization rasters; or the preset frequency domain location is a plurality of frequency domain locations in a target time domain in a plurality of periods, and the plurality of periods are a plurality of periods in a plurality of synchronization rasters and/or non-synchronization rasters.

Optionally, the preset frequency domain location in this embodiment of this application is a frequency domain location corresponding to a first time domain location set; and SSBs corresponding to the first time domain location set include at least one of the following: SSBs whose indexes are consecutive, and SSBs whose time intervals or SSB indexes meet a preset relationship. The SSBs whose time intervals or SSB indexes meet the preset relationship include consecutive SSBs or nonconsecutive SSBs whose time intervals or SSB indexes meet the preset relationship.

It should be noted that the apparatus for processing a synchronization signal applied to the terminal side in the embodiments of this application may be an apparatus, or may be a component, an integrated circuit, or a chip in a terminal. The apparatus may be a mobile communications device, or may be a non-mobile communications device. For example, the mobile communications device may be a mobile phone, a tablet computer, a laptop computer, a palmtop computer, an in-vehicle communications terminal, a wearable device, an ultra-mobile personal computer (ultra-mobile personal computer, UMPC), a netbook, or a personal digital assistant (personal digital assistant, PDA). The non-mobile communications device may be a server, a network attached storage (Network Attached Storage, NAS), a personal computer (personal computer, PC), a television (television, TV), an automated teller machine, or a self-service machine. This is not specifically limited in the embodiments of this application.

In addition, the apparatus for processing a synchronization signal block applied to the terminal side in the embodiments of this application may be an apparatus with an operating system. The operating system may be an Android (Android) operating system, an iOS operating system, or another possible operating system. This is not specifically limited in the embodiments of this application.

It should be noted that the apparatus for processing a synchronization signal block applied to the base station side provided in the embodiments of this application can implement the processes in the method embodiment in FIG. 4. To avoid repetition, details are not described herein again.

The apparatus for processing a synchronization signal block applied to the terminal side provided in the embodiments of this application can implement the processes in the method embodiment in FIG. 5. To avoid repetition, details are not described herein again.

Optionally, an embodiment of this application further provides a communications device, including a processor 1310, a memory 1309, and a program or an instruction that is stored in the memory 1309 and that can run on the processor 1310. When the program or the instruction is executed by the processor 1310, the processes of the foregoing method embodiment for processing a synchronization signal block applied to the base station side or the terminal side are implemented and a same technical effect can be achieved. To avoid repetition, details are not described herein again.

It should be noted that the communications device in this embodiment of this application includes the foregoing mobile communications device and the foregoing non-mobile communications device.

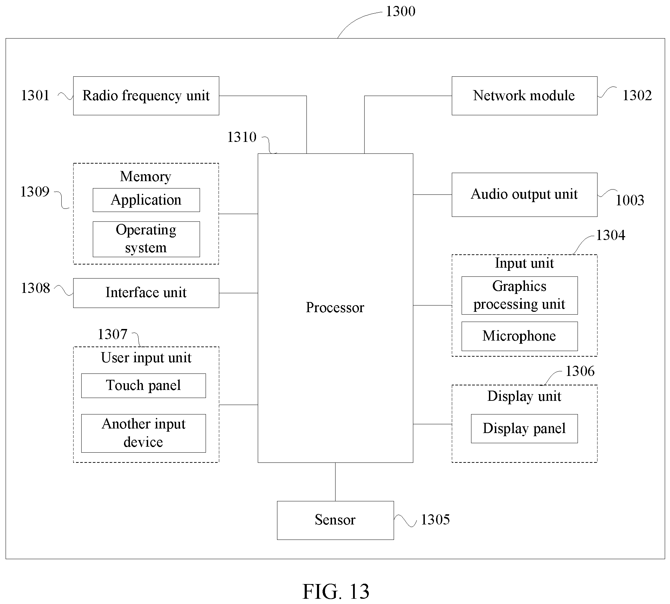

FIG. 13 is a schematic structural diagram of hardware of a communications device according to an embodiment of this application.

A communications device 1300 includes but is not limited to components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art can understand that the communications device 1300 may further include a power supply (such as a battery) that supplies power to each component. The power supply may be logically connected to the processor 1310 by using a power supply management system, to implement functions such as charging and discharging management, and power consumption management by using the power supply management system. The structure of the communications device shown in FIG. 13 does not constitute a limitation on the communications device. The communications device may include components more or fewer than those shown in the diagram, a combination of some components, or different component arrangements. Details are not described herein.

In a case that the communications device is a communications device on a terminal side, the radio frequency unit 1301 is configured to detect a synchronization signal block SSB at a preset frequency domain location to obtain a first SSB, where the first SSB includes at least one of the following: an SSB having a target extended cyclic prefix and a plurality of identical SSBs.

The processor 1310 is configured to decode the first SSB.

In a case that the communications device is a communications device on a base station side, the radio frequency unit 1301 is configured to send a first synchronization signal block SSB at a preset frequency domain location, where the first SSB includes at least one of the following: an SSB having a target extended cyclic prefix ECP and a plurality of identical SSBs.

Optionally, the target extended cyclic prefix includes at least one of the following: an extended cyclic prefix ECP, an ECP-1, and an ECP-2.

Optionally, cyclic prefixes of the plurality of identical SSBs include one of the following: an extended cyclic prefix ECP and a normal cyclic prefix NCP.

Optionally, the preset frequency domain location is one or more frequency domain locations in a synchronization raster, one or more frequency domain locations in a non-synchronization raster, or one or more frequency domain locations in a combination of a synchronization raster and a non-synchronization raster.

Optionally, the preset frequency domain location is a plurality of frequency domain locations corresponding to a same time domain in a plurality of synchronization rasters and/or non-synchronization rasters; or the preset frequency domain location is a plurality of frequency domain locations in a target time domain in a plurality of periods, and the plurality of periods are a plurality of periods in a plurality of synchronization rasters and/or non-synchronization rasters.

Optionally, the preset frequency domain location is a frequency domain location corresponding to a first time domain location set; and SSBs corresponding to the first time domain location set include at least one of the following: SSBs whose indexes are consecutive, and SSBs whose time intervals or SSB indexes meet a preset relationship. The SSBs whose time intervals or SSB indexes meet the preset relationship include consecutive SSBs or nonconsecutive SSBs whose time intervals or SSB indexes meet the preset relationship.

Optionally, the preset relationship is a predefined preset relationship, or a preset relationship determined according to a frequency domain location of a synchronization raster.

Optionally, the preset relationship is configured based on at least one of the following: a time domain or frequency domain location relationship between a primary synchronization signal PSS and a secondary synchronization signal SSS; a phase difference or a cyclic shift between the PSS and the SSS; a sequence of the PSS and/or a sequence of the SSS; a phase or a cyclic shift of a physical broadcast channel-demodulation reference signal PBCH-DMRS; a master system information block MIB or a system information block SIB; and a radio resource control RRC message.

An embodiment of this application further provides a readable storage medium. The readable storage medium stores a program or an instruction, and when the program or the instruction is executed by a processor, the processes of the foregoing method embodiment for processing a synchronization signal block are implemented and a same technical effect can be achieved. To avoid repetition, details are not described herein again.

The processor is a processor in the communications device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction to implement the processes of the foregoing method embodiment for processing a synchronization signal block, and a same technical effect can be achieved. To avoid repetition, details are not described herein again.

It should be understood that the chip mentioned in this embodiment of this application may also be referred to as a system-level chip, a system chip, a chip system, or an on-chip system chip.

It can be understood that the embodiments described in the present disclosure may be implemented by hardware, software, firmware, middleware, microcode, or a combination thereof. For hardware implementation, a module, a unit, a submodule, a subunit, or the like may be implemented in one or more application specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general purpose processors, controllers, microcontrollers, microprocessors, or other electronic units or a combination thereof used to perform the functions in this application.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A method for processing a synchronous signal block, comprising:
detecting a synchronization signal block SSB at a preset frequency domain location to obtain a first SSB, wherein the first SSB comprises at least one of the following: an SSB having a target extended cyclic prefix and a plurality of identical SSBs; and
decoding the first SSB.

2. The method according to claim 1, wherein the target extended cyclic prefix comprises at least one of the following: an extended cyclic prefix ECP, an ECP-1, and an ECP-2.

3. The method according to claim 1, wherein cyclic prefixes of the plurality of identical SSBs comprise one of the following: a target extended cyclic prefix and a normal cyclic prefix.

4. The method according to claim 1, wherein the preset frequency domain location is one or more frequency domain locations in a synchronization raster, one or more frequency domain locations in a non-synchronization raster, or one or more frequency domain locations in a combination of a synchronization raster and a non-synchronization raster.

5. The method according to claim 1 or 4, wherein the preset frequency domain location is a plurality of frequency domain locations corresponding to a same time domain in a plurality of synchronization rasters and/or non-synchronization rasters; or
the preset frequency domain location is a plurality of frequency domain locations in a target time domain in a plurality of periods, and the plurality of periods are a plurality of periods in a plurality of synchronization rasters and/or non-synchronization rasters.

6. The method according to claim 1 or 4, wherein the preset frequency domain location is a frequency domain location corresponding to a first time domain location set; and
SSBs corresponding to the first time domain location set comprise at least one of the following: SSBs whose indexes are consecutive, and SSBs whose time intervals or SSB indexes meet a preset relationship.

7. The method according to claim 6, wherein the SSBs whose time intervals or SSB indexes meet the preset relationship comprise consecutive SSBs or nonconsecutive SSBs whose time intervals or SSB indexes meet the preset relationship.

8. The method according to claim 6, wherein the preset relationship is a predefined preset relationship or a preset relationship determined according to a frequency domain location of a synchronization raster.

9. The method according to claim 6, wherein the preset relationship is configured based on at least one of the following:
a time domain or frequency domain location relationship between a primary synchronization signal PSS and a secondary synchronization signal SSS;
a phase difference or a cyclic shift between the PSS and the SSS;
a sequence of the PSS and/or a sequence of the SSS;
a phase or a cyclic shift of a physical broadcast channel-demodulation reference signal PBCH-DMRS;
a master system information block MIB or a system information block SIB; and
a radio resource control RRC message.

10. The method according to claim 1, wherein the decoding the first SSB comprises:
performing joint decoding on a plurality of SSBs having a target cyclic prefix or a plurality of identical SSBs.

11. A method for processing a synchronous signal block, comprising:
sending a first synchronization signal block SSB at a preset frequency domain location, wherein the first SSB comprises at least one of the following: an SSB having a target extended cyclic prefix ECP and a plurality of identical SSBs.

12. The method according to claim 11, wherein the target extended cyclic prefix comprises at least one of the following: an extended cyclic prefix ECP, an ECP-1, and an ECP-2.

13. The method according to claim 11, wherein cyclic prefixes of the plurality of identical SSBs comprise one of the following: a target extended cyclic prefix and a normal cyclic prefix.

14. The method according to claim 11, wherein the preset frequency domain location is one or more frequency domain locations in a synchronization raster, one or more frequency domain locations in a non-synchronization raster, or one or more frequency domain locations in a combination of a synchronization raster and a non-synchronization raster.

15. The method according to claim 11 or 14, wherein the preset frequency domain location is a plurality of frequency domain locations corresponding to a same time domain in a plurality of synchronization rasters and/or non-synchronization rasters; or
the preset frequency domain location is a plurality of frequency domain locations in a target time domain in a plurality of periods, and the plurality of periods are a plurality of periods in a plurality of synchronization rasters and/or non-synchronization rasters.

16. The method according to claim 11 or 14, wherein the preset frequency domain location is a frequency domain location corresponding to a first time domain location set; and
SSBs corresponding to the first time domain location set comprise at least one of the following: SSBs whose indexes are consecutive, and SSBs whose time intervals or SSB indexes meet a preset relationship.

17. The method according to claim 16, wherein the SSBs whose time intervals or SSB indexes meet the preset relationship comprise consecutive SSBs or nonconsecutive SSBs whose time intervals or SSB indexes meet the preset relationship.

18. The method according to claim 16, wherein the preset relationship is a predefined preset relationship, or a preset relationship determined according to a frequency domain location of a synchronization raster.

19. The method according to claim 18, wherein the preset relationship is configured based on at least one of the following:
a time domain or frequency domain location relationship between a primary synchronization signal PSS and a secondary synchronization signal SSS;
a phase difference or a cyclic shift between the PSS and the SSS;
a sequence of the PSS and/or a sequence of the SSS;
a phase or a cyclic shift of a physical broadcast channel-demodulation reference signal PBCH-DMRS;
a master system information block MIB or a system information block SIB; and
a radio resource control RRC message.

20. An apparatus for processing a synchronous signal block, comprising:
a detection module, configured to detect a synchronization signal block SSB at a preset frequency domain location to obtain a first SSB, wherein the first SSB comprises at least one of the following: an SSB having a target extended cyclic prefix and a plurality of identical SSBs; and
a decoding module, configured to decode the first SSB.

21. The apparatus according to claim 20, wherein the target extended cyclic prefix comprises at least one of the following: an extended cyclic prefix ECP, an ECP-1, and an ECP-2.

22. The apparatus according to claim 20, wherein the preset frequency domain location is one or more frequency domain locations in a synchronization raster, one or more frequency domain locations in a non-synchronization raster, or one or more frequency domain locations in a combination of a synchronization raster and a non-synchronization raster.

23. The apparatus according to claim 20 or 22, wherein the preset frequency domain location is a plurality of frequency domain locations corresponding to a same time domain in a plurality of synchronization rasters and/or non-synchronization rasters; or
the preset frequency domain location is a plurality of frequency domain locations in a target time domain in a plurality of periods, and the plurality of periods are a plurality of periods in a plurality of synchronization rasters and/or non-synchronization rasters.

24. The apparatus according to claim 20 or 22, wherein the preset frequency domain location is a frequency domain location corresponding to a first time domain location set; and
SSBs corresponding to the first time domain location set comprise at least one of the following: SSBs whose indexes are consecutive, and SSBs whose time intervals or SSB indexes meet a preset relationship.

25. The apparatus according to claim 24, wherein the SSBs whose time intervals or SSB indexes meet the preset relationship comprise consecutive SSBs or nonconsecutive SSBs whose time intervals or SSB indexes meet the preset relationship.

26. An apparatus for processing a synchronous signal block, comprising:
a sending module, configured to send a first synchronization signal block SSB at a preset frequency domain location, wherein the first SSB comprises at least one of the following: an SSB having a target extended cyclic prefix ECP and a plurality of identical SSBs.

27. The apparatus according to claim 26, wherein the target extended cyclic prefix comprises at least one of the following: an extended cyclic prefix ECP, an ECP-1, and an ECP-2.

28. The apparatus according to claim 26, wherein the preset frequency domain location is one or more frequency domain locations in a synchronization raster, one or more frequency domain locations in a non-synchronization raster, or one or more frequency domain locations in a combination of a synchronization raster and a non-synchronization raster.

29. The apparatus according to claim 26 or 28, wherein the preset frequency domain location is a plurality of frequency domain locations corresponding to a same time domain in a plurality of synchronization rasters and/or non-synchronization rasters; or
the preset frequency domain location is a plurality of frequency domain locations in a target time domain in a plurality of periods, and the plurality of periods are a plurality of periods in a plurality of synchronization rasters and/or non-synchronization rasters.

30. The apparatus according to claim 26 or 28, wherein the preset frequency domain location is a frequency domain location corresponding to a first time domain location set; and
SSBs corresponding to the first time domain location set comprise at least one of the following: SSBs whose indexes are consecutive, and SSBs whose time intervals or SSB indexes meet a preset relationship.

31. The apparatus according to claim 30, wherein the SSBs whose time intervals or SSB indexes meet the preset relationship comprise consecutive SSBs or nonconsecutive SSBs whose time intervals or SSB indexes meet the preset relationship.

32. A communications device, comprising a processor, a memory, and a program or an instruction that is stored in the memory and that can be run on the processor, wherein when the program or the instruction is executed by the processor, the steps of the method for processing a synchronous signal block according to any one of claims 1 to 10 are implemented.

33. A communications device, comprising a processor, a memory, and a program or an instruction that is stored in the memory and that can be run on the processor, wherein when the program or the instruction is executed by the processor, the steps of the method for processing a synchronous signal block according to any one of claims 11 to 19 are implemented.

34. A readable storage medium, wherein the readable storage medium stores a program or instruction, and when the program or the instruction is executed by a processor, the steps of the method for processing a synchronous signal block according to any one of claims 1 to 10 are implemented.

35. A readable storage medium, wherein the readable storage medium stores a program or instruction, and when the program or the instruction is executed by a processor, the steps of the method for processing a synchronous signal block according to any one of claims 11 to 19 are implemented.

36. A chip, comprising a processor and a communications interface, wherein the communications interface is coupled to the processor, and the processor is configured to run a program or an instruction to implement the steps of the method for processing a synchronous signal block according to any one of claims 1 to 10 or the steps of the method for processing a synchronous signal block according to any one of claims 11 to 19.

37. A computer program product, wherein when the computer program product is executed by at least one processor, the steps of the method for processing a synchronous signal block according to any one of claims 1 to 10 are implemented, or the steps of the method for processing a synchronous signal block according to any one of claims 11 to 19 are implemented.

38. A communications device, wherein the communications device is configured to perform the steps of the method for processing a synchronous signal block according to any one of claims 1 to 10 or the steps of the method for processing a synchronous signal block according to any one of claims 11 to 19.
